(19) Europäisches Patentamt
European Patent Office
Office européen des brevets

(11) EP 1 662 594 A1

(12) # EUROPEAN PATENT APPLICATION
published in accordance with Art. 158(3) EPC

(43) Date of publication:
**31.05.2006 Bulletin 2006/22**

(21) Application number: **04746923.4**

(22) Date of filing: **28.06.2004**

(51) Int Cl.:
***H01M 8/02*** *(1974.07)* ***H01M 8/10*** *(1974.07)*
***H01B 1/06*** *(1968.09)* ***H01B 13/00*** *(1968.09)*

(86) International application number:
**PCT/JP2004/009454**

(87) International publication number:
**WO 2005/001971 (06.01.2005 Gazette 2005/01)**

(84) Designated Contracting States:
**DE FR GB**

(30) Priority: **30.06.2003 JP 2003186613**

(71) Applicant: **Sumitomo Chemical Company, Limited**
**Tokyo 104-8260 (JP)**

(72) Inventor: **NODONO, Mitsunori**
**Tsukuba-shi, Ibaraki 3050005 (JP)**

(74) Representative: **Vossius & Partner**
**Siebertstrasse 4**
**81675 München (DE)**

(54) **POLYMER ELECTROLYTE COMPOSITE FILM, METHOD FOR PRODUCTION THEREOF AND USE THEREOF**

(57) A polymer electrolyte composite film which comprises a porous base material and, provided in fine pores thereof, a polymer electrolyte comprising a hydrophilic moiety and a hydrophobic moiety, the hydrophilic and hydrophobic moieties of said polymer electrolyte satisfy the following formula (1): $a + b \leq d$ (1) [wherein, a represents the size of a hydrophobic domain (nm), b represents the size of a hydrophilic domain (nm), and d represents the average pore diameter (nm) of fine pores of the porous base material].

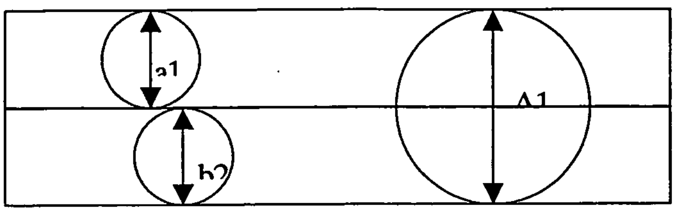


Figure 1

EP 1 662 594 A1

## Description

### Technical Field

The present invention relates to a polymer electrolyte composite membrane having a composite layer comprising a porous base material having fine pores which is filled with a polymer electrolyte comprising a hydrophobic moiety and a hydrophilic moiety, its manufacturing method, and its use.

### Background Art

Recently, fuel cells (solid polymer electrolyte type fuel cell) using a proton conductive membrane as an electrolyte are actively developed. Solid polymer electrolyte type fuel cells have features of operating at a low temperature, having high output per unit area and of being capable of being downsized. Due to these features, solid polymer electrolyte type fuel cells have a promising use for on-vehicle power supply, etc. due to the features, and some polymer electrolyte membranes as a basic material thereof are proposed.
For example, JP-A-6-29302 proposed a polymer electrolyte composite membrane in which a polymer electrolyte is provided in a porous base material. The composite layer has more improved mechanical strength in comparison with a membrane comprising a polymer electrolyte, however, its ion conductivity is not sufficient and satisfactory power generating performance is not obtained.
An objective of the present invention is to provide a polymer electrolyte composite membrane that exhibits high power generating performance, its manufacturing method and its use.

### Disclosure of Invention

Inventors of the present invention made vigorous investigation on polymer electrolytes so as to find a polymer electrolyte composite membrane that exhibits high power generating performance, as a result, the inventors found out that when a porous base material is filled with a polymer electrolyte having a phase-separated structure of a hydrophobic moiety and a hydrophilic moiety in a solid state, and the sum of the size of hydrophobic domain and that of hydrophilic domain in the phase-separated structure equal to or less than a size of average pore diameter of fine pores of a porous base material, an electrolyte composite membrane thus obtained exhibits high power generating performance, furthermore, the inventors carried out various examinations to complete the invention.
That is, the invention provides a polymer electrolyte composite membrane comprising a porous base material having fine pores which is filled with a polymer electrolyte comprising a hydrophobic moiety and a hydrophilic moiety, and the polymer electrolyte forms a phase-separate structure of each phase of a hydrophobic moiety and a hydrophilic moiety in a solid state, and each phase satisfies the following formula (1)

$$a+b \leqq d \quad (1)$$

(In the formula, a represents the size (nanometer) of a hydrophobic domain, b represents the size (nanometer) of a hydrophilic domain in a phase-separated structure, and d represents the average pore diameter (nanometer) of fine pores of a porous base material).
Further, the invention provides a method for manufacturing the polymer electrolyte composite membrane.
Further, the invention provides a fuel cell using the polymer electrolyte composite membrane.

### Brief Description of Drawings

Figure 1 is a first diagram of how to obtain the sum of the size of hydrophobic domain a and that of hydrophilic domain b.
Figure 2 is a second diagram of how to obtain the sum of the size of hydrophobic domain a and that of hydrophilic domain b.

### Preferable Embodiment for Carrying out the Invention

Hereinafter, the details of the present invention will be explained.
A polymer electrolyte composite membrane according to the invention forms a phase-separate structure of a

hydrophobic moiety and a hydrophilic moiety in a solid state and a relationship among the size of a (nanometer, nm) of a hydrophobic domain, the size of b (nm) of a hydrophilic domain and d (nm) of the average pore diameter of a fine pore of a porous base material satisfies the formula (1).

Here, the size of a (nm) of a hydrophobic domain, and the size of b (nm) of a hydrophilic domain can be measured, for example, by transmission electron microscope, small-angle X ray diffraction, and the like.

It is preferable to use a transmission electron microscope among them. A method for measuring a and b include, for example, a step of dyeing a hydrophobic phase and a hydrophilic phase in different colors by dyeing an ultra-thin piece of film of polymer electrolyte having a hydrophobic moiety and a hydrophilic moiety, which is cut in a film thickness direction, in an ordinary manner; a step of measuring an value of diameter of at least ten maximum circles included in respective phases; and a step of calculating an average value of the respective diameters of maximum circle of the respective phases. An average value of the respective diameters thus obtained is set to be a size a (nm) of a hydrophobic domain or a size b (nm) of a hydrophilic moiety. Further, a+b of the sum of the size of a hydrophobic domain and that of a hydrophilic domain may be calculated by using the obtained values or when a polymer electrolyte forms a continuous phase-separated structure of a hydrophobic moiety and hydrophilic moiety, a value of the diameter of maximum circle included both in a hydrophobic phase and a hydrophilic phase, which are dyed in different colors, is measured at least ten circles, and an average of the measured values may be used as the average value.

In a case of lamellar structure having a continuous phase-separated structure of a hydrophobic moiety and hydrophilic moiety (Fig.1), a circle included in the each phase is set to be $a_1$ or $b_1$. Further, a maximum circle included in both of the phases is set to be $A_1$. Further, in a case of lamellar structure having an uneven thickness (Fig.2), a circle included in the respective phases is set to be $a_2$ or $b_2$. Further, a maximum circle included in both of the phases is set to be $A_2$. More than ten circles thus determined are selected from the different parts and an average of the diameters may be set to a size of a of a hydrophobic domain or a size of b of a hydrophilic domain. Alternatively, a value of the diameter of maximum circle may be set to be the sum of value a+ b(nm).

A polymer electrolyte to be used in the invention should satisfy the formula (1), that is, a relationship between a value of a+b, obtained by any of the above methods, and an average value of d (nanometer) of pore diameter of fine pores of a porous base material should satisfy the formula (1).

In making a film of a polymer electrolyte, it is preferable to use a film manufactured by using the same solvent and under the same drying condition as that in manufacturing a polymer electrolyte composite membrane that will be described below.

It is more preferable that a relationship between a+b and d satisfies $a+b \leqq d/2$.

A value of (a+b) of the sum of a and b is usually equal to or more than one nanometer, preferably equal to or more than three nanometers, and more preferably equal to or more than ten nanometers. Further, it is usually equal to or less than 200 nanometers, preferably equal to or less than 100 nanometers, and more preferably equal to or less than 80 nanometers.

A hydrophilic moiety of polymer electrolyte have a repeating unit having hydrophilic property. An example of the repeating unit having hydrophilic property includes a repeating unit having an ion-exchange group, and the ion-exchange group includes a cation-exchange group such as $-SO_3H$, -COOH, $-PO(OH)_2$, -POH(OH), or -Ph(OH) (Ph represents a phenyl group) and an anion-exchange group such as $-NH_2$, -NHR, -NRR', $-NRR'R''^+$, $-NH_3^+$ (R represents an alkyl group, a cycloalkyl group, an aryl group, etc.). A part or whole of these groups may form salt with counter ions. Further, a repeating unit including a group such as $-SO_2NHSO_2-$ in a main chain of polymer may be included in a repeating unit having hydrophilic property.

A hydrophobic moiety of polymer electrolyte have a repeating unit having hydrophobic property. The repeating unit having hydrophobic property includes a repeating unit having none of the ion-exchange groups and a group such as $-SO_2NHSO_2-$.

When both of the repeating unit having hydrophilic property and that having hydrophobic property present in a polymer, these repeating units are chemically different each other, due to interaction between the repeating units, usually, the polymer has a phase-separated structure of a domain comprising a hydrophobic repeating unit and that comprising a hydrophilic repeating unit, that is, a domain comprising a hydrophobic moiety and that comprising a hydrophilic moiety, in a nanometer scale.

In the invention, it is preferable that respective domains have a continuous phase-separated structure, respectively, and it is more preferable that they have a phase-separated structure in which respective phases are parallel to a film thickness direction (equivalent to Fig.1).

An example of polymer electrolyte having the phase-separated structure includes

(A)polymer electrolyte having any one of a sulfonic acid group and a phosphonic acid group or both that is introduced in a main chain of a copolymer of aliphatic hydrocarbon; (B)polymer electrolyte having any one of a sulfonic acid group and a phosphonic acid group or both that is introduced in a copolymer having aliphatic hydrocarbon in a main chain whose a part or the whole of hydrogen atoms are substituted with a fluorine atom; (C) polymer electrolyte

having any one of a sulfonic acid group and a phosphonic acid group or both that is introduced in a polymer having a main chain containing aromatic ring; (D) polymer electrolyte having any one of a sulfonic acid group and a phosphonic acid group or both that is introduced in a polymer having a main chain that substantially includes none of carbon atoms; (E)polymer electrolyte having any one of a sulfonic acid group and a phosphonic acid group or both that is introduced in a copolymer comprising two or more of repeating units selected from the group consisting of repeating units of polymer which is polymer prior to introducing any one of sulfonic acid group and phosphonic acid or both into polymer electrolyte described in (A) to (D); and (F)polymer electrolyte introduced an acidic compound, such as sulfuric acid or phosphoric acid, by ion bond to a polymer including a nitrogen atom in a main chain or a side chain.

The (A) polymer electrolyte includes, for example, polyvinyl sulfonic acid, polystyrene sulfonic acid, poly (α-methylstyrene) sulfonic acid.

The (B) polymer electrolyte includes a polymer, typified by Nafion (registered trademark manufactured by E.I. du Pont de Nemours Company., will be same hereinafter), having a side chain with perfluoroalkysulfonicacid and a main chain comprising perfluoroalkane; a sulfonic acid type polystyrene-graft-ethylene-tetrafluoroethylene copolymer (ETFE, for example, disclosed by JP-A-9-102322) comprising a main chain formed by a copolymer of a fluorine carbide type vinyl monomer and a hydrogen carbide type vinyl monomer and a hydrogen carbide type side chain having a sulfonic acid group; and a sulfonic acid type poly (trifluorostyrene)-graft ETFE film (for example, disclosed by USP Nos.4,012,303 and 4,605,685) comprising a solid polymer electrolyte obtained by graft-polymerizing a film formed by a copolymer of a fluorine carbide type vinyl monomer and hydrogen carbide type vinyl monomer and a, β, β-trifluorostyrene, and introducing a sulfonic acid group thereto.

The (C) polymer electrolyte may include one having a main chain interrupted by a hetero atom such as an oxygen atom, for example, a polymer electrolyte having a sulfonic acid introduced to a polymer such as polyetheretherketone, polysulfone, polyethersulfone, poly(arylene ether), polyimide, poly((4-phenoxybenzoyl)-1, 4-phenylene), polyphenylene sulfide, polyphenylquinoxsalene; sulfoarylated polybenzimidazole, sulfoalkylated polybenzimidazole, phosphoalkylated polybenzimidazole (for example, JP-A-H9-110982), phophosphonated poly (phenylene ether)(for example, J.Appl.Polym.Sci., 18, 1969 (1974)).

The (D) polymer electrolyte includes polyphosphazene to which a sulfonic acid group is introduced, polysiloxane having a phosphonic acid group described in Polymer Prep., 41, No.1, 70 (2000), etc.

The (E) polymer electrolyte includes a polymer electrolyte having any one of a sulfonic acid group and a phosphonic acid group or both that is introduced in a random copolymer; a polymer electrolyte having any one of a sulfonic acid group and a phosphonic acid group or both that is introduced in an alternating copolymer; and a polymer electrolyte having any one of a sulfonic acid group and a phosphonic acid group or both that is introduced in a block copolymer. The polymer electrolyte having any one of a sulfonic acid group and a phosphonic acid group or both that is introduced in a random copolymer includes, for example, sulfonatedpolyethersulfone-dihydroxybiphenyl copolymer (for example, JP-A-11-116679).

The (F)polymer electrolyte includes, for example, polybenzimidazole including phosphoric acid disclosed by JP-A-11-503262.

In a block copolymer included in the (E) polymer electrolyte, an example of block having any one of a sulfonic acid group and a phosphonic acid group or both is a block having any one of a sulfonic acid group and a phosphonic acid group or both disclosed by JP-A-2001-250567.

It is preferable that the polymer electrolyte according to the invention comprises a block copolymer or a graft copolymer, especially, it is preferable that the polymer electrolyte comprises a polymer having a main chain with an aromatic ring such as the (C) polymer electrolyte, and it is more preferable that the polymer electrolyte comprises a polymer to which any one of a sulfonic acid group and a phosphonic acid group or both is introduced.

Weight molecular weight of polymer electrolyte used in the invention is usually approximately 1000 to approximately 1000000, and a value of ion exchange group equivalent weight is usually approximately 500 to 5000g/mol.

Additives such as a plasticizer, a stabilizer, a mold releasing material used in ordinary polymers may be used within a range that does not contradict to an objective of the invention.

According to the invention, the polymer electrolyte, which will be described below, whose relationship between an average value of fine pore diameter d (nanometer) of a porous base material satisfies the formula (1), is selected.

Here, it is preferable that a value obtained by bubble point method (ASTM F316-86) is used as an average value of fine pore diameter d (nanometer) of porous base material.

An average value of fine pore diameter d is usually one to approximately 1,000,000 nanometers, is preferably approximately 30 to 10,000 nanometers, and is more preferably approximately 50 to 1,000 nanometers.

A porous base material used in the invention has a polymer electrolyte in its fine pores, and is used to further improve the strength, flexibility, and durability of the polymer electrolyte. Therefore, any porous material that satisfies the intended use may be used, includes for example, a porous film, woven fabric, nonwoven fabric and fibril, and may

be used regardless of the shape or quality of material.

From the perspective of heat resistance, or stiffening effect of physical strength, an aliphatic based polymer, an aromatic based polymer, and a fluorine-containing polymer are preferable.

Here, an aliphatic based polymer includes polyethylene, polypropylene, polyvinyl alcohol, ethylene-vinyl alcohol copolymer, etc, but it is not limited to them. Further, the term of polyethylene used here refers to the general term of ethylene based polymer having a crystal structure of polyethylene, and includes, for example, a copolymer comprising ethylene and other monomers, and specifically includes a copolymer referred to as linear low density polyethylene (LLDPE) comprising a copolymer with ethylene or $\alpha$-olefin, or an ultrahigh molecular weight polyethylene, etc. Further, the term of polypropylene used here refers to the general term of propylene based polymers having a crystal structure of polypropylene, and includes a propylene based block copolymer, a random copolymer, etc. (these are copolymers comprising ethylene or 1-butene, etc), which are generally used.

An aromatic based polymer includes polyester, polyethylene terephthalate, polycarbonate, polyimide, polysulfone, etc.

Further a fluorine-containing polymer includes a thermoplastic resin having at least one carbon-fluorine bond in a molecule. Usually, it is preferably to use an aliphatic based polymer having a structure in which all or most of hydrogen atoms are substituted by a fluorine atom.

The specific example includes polytrifluoroethylene, polytetrafluoroethylene, polychlorotrifluoroethylene, poly (tetrafluoroethylene-hexafluoropropylene), poly (tetrafluoroethylene-perfluoroalkylether), polyvinylidene-fluoride, etc, but it is not limited to them. Polytetrafluoroethylene and poly (tetrafluoroethylene-hexafluoropropylene) are preferable among them, especially polytetrafluoroethylene is preferable. Further, it is preferable that the fluororesin has an average molecular weight of 100,000 or more, from the viewpoint of excellence of mechanical strength.

When the porous base material is used as a diaphragm for solid polymer electrolyte type fuel cells, the film thicknesses is usually one to approximately 100 micrometers, preferably approximately three to approximately 30 micrometers, and further preferably approximately five to approximately 20 micrometers; the porosity is usually approximately 20 to approximately 98%, preferably approximately 40 to approximately 95%.

When a film thickness of porous base material is too thin, an effect of increasing the strength of polymer electrolyte composite membrane or a stiffening effect such as imparting flexibility or durability is insufficient and it is more likely to generate gas leakage (cross leakage). Alternatively, when a film thickness of porous base material is too thick, an electric resistance becomes high, and a polymer electrolyte composite membrane thus obtained becomes insufficient as a diaphragm. When the porosity is too small, the resistance as polymer electrolyte composite membrane becomes large, and when the porosity is too large, the strength of porous base material itself generally lowers, and the stiffening effect deteriorates.

Next, a method for manufacturing a polymer electrolyte composite membrane will be explained.

In a method according to the invention, a polymer electrolyte and a porous base material that satisfy the formula (1) are used.

A method for compositing a polymer electrolyte and a porous base material to manufacture a polymer electrolyte composite membrane includes a method of making a polymer electrolyte into solution, impregnating a porous base material with the solution, taking out the porous base material, and then drying solvent to manufacture a composite membrane; a method of applying the solution on a porous base material, and drying solvent to manufacture a composite membrane, and a method of contacting the solution with a porous base material under reduced pressure, impregnating a fine pore of porous base material with the solution by returning the pressure to a normal pressure, and drying solvent to manufacture a composite membrane, etc.

In a case of using solution of polymer electrolyte, there are no particular limitations for solvents provided that they can be soluble, and relatively easily removed subsequently; an aprotic polar solvent such as N, N-dimethyl formamide, N, N-dimethyl acetamide, N-methyl-2-pyrrolidone, or dimethyl sulfoxide; a chlorinated solvent such as dichloromethane, chloroform, 1, 2-dichloroethane, chlorobenzene, or dichlorobenzene; alcohol such as methanol, ethanol, or propanol; and alkylene glycol monoalkyl ether such as ethylene glycol monomethyl ether, ethylene glycol monoethyl ether, propylene glycol monomethyl ether, or propylene glycol monoethyl ether are preferably used. Any one of the solvents can be used alone; however, two or more kinds of solvents can be mixed to use as need arises. From a viewpoint of solubility in polymer electrolyte, dimethyl acetamide, dimethyl formamide, dimethyl sulfoxide and dichloromethane-methanol mixture solvent are preferable.

A polymer electrolyte composite membrane according to the invention comprises a porous base material and, provided in fine pores thereof, a polymer electrolyte; or a polymer electrolyte composite membrane may have a polymer electrolyte layer provided on a surface of porous base material.

An electrolyte membrane or polymer electrolyte composite membrane may be further layered on a polymer electrolyte composite membrane according to the invention, a preferred embodiment includes a layer structure such as (polymer electrolyte composite membrane/electrolyte membrane), (electrolyte membrane/polymer electrolyte composite membrane/electrolyte membrane), and a layer structure such as (electrolyte membrane/polymer electrolyte composite

membrane/electrolyte membrane/polymer electrolyte composite membrane/electrolyte membrane) formed by superposing the layer structures. In the respective layer structures, any one of polymer electrolyte composite membrane and electrolyte membrane or both may be different each other or same.

Next, a fuel cell in which a polymer electrolyte composite membrane according to the invention is used will be explained.

A fuel cell comprises a plurality of unit cells laminated alternately through a separator on which a gas passing unit is provided; each of the unit cells comprises an anode and a cathode provided on gas diffusion electrodes provided opposing each other, and a film electrode assembly comprising a polymer electrolyte film that selectively passes an ion, interposed between the both electrodes in contact with the electrodes. In the fuel cell, electricity is generated by using electrochemical reaction generated by supplying fuel such as hydrogen, reformed gas, methanol to an anode and an oxidizing reagent such as oxygen to a cathode; that is, fuel is oxidized electrocatalytically and an oxidizing agent is simultaneously reduced electrocatalytically, and chemical reaction energy is directly transformed into electrical energy to generate electricity.

Here, there are no particular limitations for catalytic agents provided that they can activate oxidation-reduction with hydrogen or oxygen, any known catalytic agent may be used; however, it is preferable to use a particle of platinum. A particle of platinum, supported by particulate or fibrous carbon such as activated charcoal or soft charcoal is preferably used.

Any known conductive substance as current collecting body can be used; however, a porous carbon woven fabric and carbon paper are preferable because they effectively transport material gas to a catalyst.

Regarding a method for joining a particle of platinum or a particle of platinum supported by carbon to a porous carbon woven fabric or carbon paper; and a method for joining that to a polymer electrolyte sheet, any know method such as a method described in J. Electrochem. Soc.: Electrochemical Science and Technology, 1988, 135(9), 2209, etc. can be used.

## Example

Hereinafter, examples will be explained; however, the present invention is not limited thereto.

(Porous base material)

A polyethylene-made porous film described below manufactured according to JP-A-2002-309024 was used. A value obtained by bubble point method ASTM F316-86 was shown as an average value of fine pore diameter.

Polyethylene-based porous film A: average value of fine pore diameter d=60 nanometers
Polyethylene-based porous film B: average value of fine pore diameter d=40 nanometers

(Evaluation of polymer electrolyte composite membrane)

A platinum catalyst supported by fibrous carbon and porous carbon woven fabric as current collector is jointed to both surfaces of polymer electrolyte composite membrane. Wet oxygen gas was fed to one surface of the unit and wet hydrogen gas was fed to another surface to measure the power generating characteristics.

Reference example 1 (Example of manufacturing polymer electrolyte)

After 167.59 gram (900 millimole)of 4, 4'-dihydroxybiphenyl (DOD)and 600 gram of benzophenone was heated, stirred and solved, 132.68 gram (960 millimole)of kalium carbonate and 180 milliliter of toluene was added there to, and heated to azeotropically hydrated. Then 200.52 gram (850 millimole)of m-dibromobenzene was added thereto at 180ºC, 0.43 gram (3 millimole) of copper bromide (I) was added in order, and stirred for six hours while being kept at 200ºC. Reaction solution was cooled and poured into a solution containing hydrochloric acid/methanol/acetone in the ratio of 2/70/30 in weight; precipitated polymers were filtered, washed with water, washed with methanol, and dried under reduced pressure to manufacture a polymer a1.

Then, 144 gram of SUMIKAEXCEL PES5003P (manufactured by SUMITOMO CHEMICAL, hydroxyl terminated polyether sulfone), 48gram of the polymer a1 was dissolved in DMAc, and 4.84 gram (35.0 millimole) of kalium carbonate and 9.52 gram (28.5 millimole) of decafluorobiphenyl was added sequentially and stirred for four hours at 80ºC. Reaction solution was cooled; a reaction mixture was poured into diluted hydrochloric acid to precipitate a polymer. The precipitated polymer was washed with water, and washed with methanol to obtain a block copolymer a2. Then, the a2 was sulfonated using concentrated sulfuric acid by an ordinary method to obtain a sulfonated bolock copolymer A shown below.

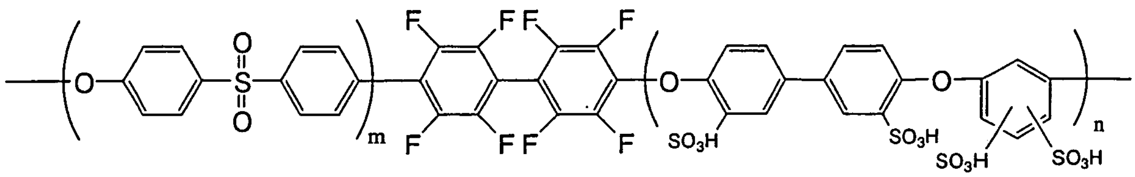

Ion exchange capacity of sulfonated block copolymer A was 1.4 meq/g.
It was confirmed by 1H-NMR measurement that the sulfonated block copolymer A has a structure in which only a1-derived moiety is sulfonated to be a hydrophilic moiety and a PES5003P-derived moiety is hydrophobic moiety.
The sulfonated block copolymer A was used to be dissolved in DMAc to prepare polymer electrolyte solution of 25wt%. The solution was casted on a glass plate and dried at 80ºC under normal pressure. The polymer electrolyte film (1) thus obtained was measured with transmission type electron microscope and it was confirmed that the sum of value of the size of hydrophobic domain and that of hydrophilic domain of a+b is 50nanometers.

<u>Reference example 2 (Example of manufacturing polymer electrolyte)</u>

<u>(Synthesis of polyether sulfones (b1))</u>

In a nitrogen atmosphere, 1500 gram of hydroxyl terminated polyether sulfone (SUMIKAEXCEL PES4003P manufactured by SUMITOMO CHEMICAL) was dissolved in 4000 milliliter of DMAc. Further, 13 gram of kalium carbonate and 600 milliliter of toluene was added thereto, heated and hydrated under the azeotropic condition of toluene and water, and the toluene was removed by distillation. Reaction solution was air-cooled down to a room temperature; 123.2 gram (368.8 millimole) of decafluorobiphenyl was added thereto to carry out a reaction while being heated gradually to 100ºC. Then, the reaction solution was charged in methanol to precipitate a polymer, the polymer was filtered and dried to obtain polyether sulfones (b1). The polyether sulfones (b1) were polyether sulfone whose terminal group was substituted by a nonafluorobiphenyloxy group.

<u>(Synthesis of block copolymer B)</u>

In a nitrogen atmosphere, 96.8 gram (0.424 mole) of hydroquinone kalium sulfonate, 202.9 gram (0.414 mole) of 4, 4'-difluoro diphenylsulfone-3, 3'-kalium disulfonate and 61.6 gram (0.445 mole) of kalium carbonate was dissolved in 2600 milliliter of DMSO. Then 500 milliter of toluene was added thereto, heated and stirred, dehydrated under the azeotropic condition of toluene and water, and the toluene was removed by distillation. Reaction solution was heated for seven hours while being stirred at 170ºC, and air-cooled down to a room temperature to obtain a polymer (b2). Then 350 gram of the polyether sulfones (b1) was added thereto, and reacted while being cooled down gradually to 140ºC. Then, the reaction solution was charged in methanol to precipitate a polymer; the polymer was filtered, washed twice with hot water of 95ºC in a volume of approximately five times based on the reaction solution, and dried to obtain a sulfonated block copolymer B described below.

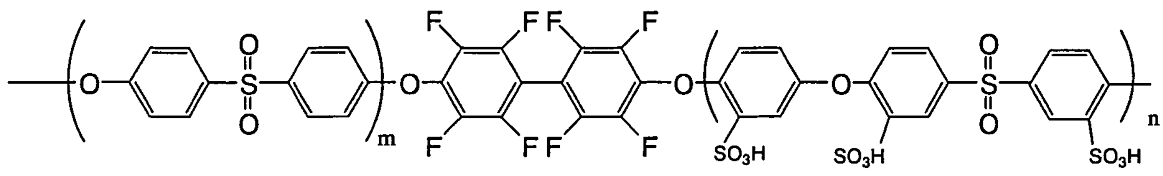

A sulfonated block copolymer B has a molecular weight in terms of a polystyrene measured by GPC of Mn=72000, Mw=390000; and ion exchange capacity of 1.43 meq/g. It was confirmed by 1H-NMR measurement that the block copolymer B was a block copolymer having a structure in which only a (b2)-derived moiety that is sulfonated is a hydrophilic moiety, and a polyether sulfones(b1)-derived moiety is hydrophobic moiety.
The sulfonated block copolymer B was used to be dissolved in NMPc to prepare polymer electrolyte solution of 25.5wt%. The solution was casted on a glass plate and dried at 80ºC under normal pressure. The polymer electrolyte film (2) thus obtained was measured with transmission type electron microscope and it was confirmed that the sum of

value of the size of hydrophobic domain and that of hydrophilic domain of a+b is 19 nanometers.

Reference example 3 (Example of manufacturing polymer electrolyte)

A mixture of having a sulfonated block copolymer B obtained by reference example 2 and a polymer containing a phosphonic acid group that is synthesized as described below in the ratio of 90:10 in weight was used to be dissolved in NMPc to prepare polymer electrolyte solution of 27wt%, the solution was casted on a glass plate and dried at 80ºC under normal pressure. The polymer electrolyte film (3) thus obtained was measured with transmission type electron microscope and it was confirmed that the sum of value of the size of hydrophobic domain and that of hydrophilic domain of a+b is 19 nanometers.

(Synthesis of polymer containing a phosphonic acid group as stabilizing additives)

According to a method disclosed by JP-A-H10-021943, in the presence of diphenylsulfone and kalium carbonate as a solvent, 4, 4'-dihydroxy diphenylsulfone, 4, 4'-dihydroxy biphenyl and 4, 4'-dichloro diphenylsulfone was reacted in the ratio of 7:3:10 in mole ratio to prepare a random copolymer shown below.

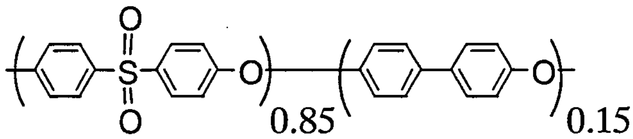

Then according to a method disclosed by JP-A-2003-282096, the copolymer was brominated, phosphonic acid-esterified and hydrolyzed to obtain a polymer containing a phosphonic acid group shown below in which approximately 0.1 piece of Br and approximately 1.7 piece of phosphonic acid group was substituted per one unit of 4, 4'-biphenol-derived unit.

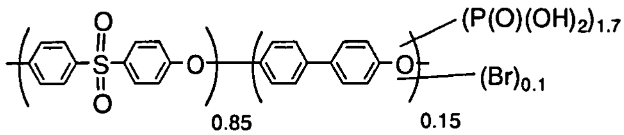

Examples 1 to 3

A polyethylene-made porous film A was fixed at a glass plate, a polymer electrolyte solution, prepared in the same way as that of reference examples 1 to 3, was dropped on the porous film. The polymer electrolyte solution was spread evenly over the porous film by using a wire coater, a coat thickness was controlled by using a bar coater having the clearance of 0.3 milimeter and dried at 80ºC under normal pressure. Then, it was dipped in 1 mol/L of hydrochloric acid, further was washed with ion-exchange water to obtain a polymer electrolyte composite membrane.
The fuel cell characteristic of the polymer electrolyte composite membrane was evaluated and the result was shown in Table 1.

Comparative example 1

A polymer electrolyte composite membrane was obtained according to Example 1 except that a polyethylene-made porous film B was used. The fuel cell characteristic of the polymer electrolyte composite membrane was evaluated and the result was shown in Table 1.

Table 1

| Voltage E(V) | 0.8 | 0.6 | 0.4 | 0.2 |
|---|---|---|---|---|
| Current value I (A/cm$^2$) | | | | |
| Example 1 | 0.08 | 0.40 | 0.98 | 1.28 |
| Example 2 | 0.20 | 0.89 | 1.40 | 1.70 |

Table continued

| Voltage E(V) | 0.8 | 0.6 | 0.4 | 0.2 |
|---|---|---|---|---|
| Current value I ($A/cm^2$) | | | | |
| Example 3 | 0.17 | 0.17 | 1.10 | 1.40 |
| Comparative Example 1 | 0.06 | 0.10 | 0.21 | 0.35 |

Industrial Applicability

The present invention can provide a polymer electrolyte composite membrane that exhibits high power generating performance by using a specific polymer electrolyte having a phase-separated structure of a hydrophobic moiety and a hydrophilic moiety in a solid state, and the sum of the size of hydrophobic domain and that of hydrophilic domain in the phase-separated structure is equal to or less than the average pore diameter of fine pores of a porous base material.

Further, a polymer electrolyte composite membrane according to the invention is advantageous as an electrolyte membrane not only for fuel cells using hydrogen as fuel but for fuel cells using alcohol such as direct methanol type fuel cell because the polymer electrolyte composite membrane exhibits high power generating performance.

## Claims

1. A polymer electrolyte composite membrane comprising a porous base material having fine pores which is filled with a polymer electrolyte comprising a hydrophobic moiety and a hydrophilic moiety,
wherein each phase of the hydrophobic and a hydrophilic moieties of the polymer electrolyte satisfy the following formula (1)

$$a+b \leqq d \quad (1)$$

(wherein a represents the size (nm) of a hydrophobic domain, b represents the size (nm)of a hydrophilic domain, and d represents the average pore diameter (nm) of fine pores of the porous base material).

2. The polymer electrolyte composite membrane according to claim 1, wherein the formula (1) is $a+b \leqq d/2$.

3. The polymer electrolyte composite membrane according to claim 1, wherein a value of a+b is equal to or more than 3 nanometers.

4. The polymer electrolyte composite membrane according to claim 1, wherein a value of a+b is equal to or more than 10 nanometers.

5. The polymer electrolyte composite membrane according to claim 1 or 3, wherein a value of a+b is equal to or less than 200 nanometers.

6. The polymer electrolyte composite membrane according to claim 1 or 4, wherein a value of a+b is equal to or less than 100 nanometers.

7. The polymer electrolyte composite membrane according to claim 7, wherein a hydrophilic repeating unit has an ion-exchange group.

8. The polymer electrolyte composite membrane according to claim 8, wherein an ion-exchange group is cation-exchange group or anion-exchange group.

9. The polymer electrolyte composite membrane according to claim 9, wherein a cation-exchange group is at least one selected from a group consisting of $-SO_3H$, -COOH, $-PO(OH)_2$, -POH(OH), -Ph(OH) (Ph represents a phenyl group).

10. The polymer electrolyte composite membrane according to claim 9, wherein an anion-exchange group is at least one selected from a group consisting of $-NH_2$, -NHR, -NRR', $-NRR'R''^+$ $-NH_3^+$ (R represents an alkyl group, cycloalkyl

group, aryl group, etc.).

**11.** A polymer electrolyte composite membrane having a continuous phase-separated structure in which a hydrophobic moiety and a hydrophilic moiety of polymer electrolyte are parallel to a membrane thickness direction.

**12.** Method for manufacturing a polymer electrolyte membrane by compositing a porous base material and a polymer electrolyte comprising a hydrophobic moiety and a hydrophilic moiety, and each phase of the hydrophobic and the hydrophilic moieties of the polymer electrolyte satisfy the following formula (1)

$$a + b \leqq d \quad (1)$$

(wherein a represents the size (nanometer) of a hydrophobic domain, b represents the size (nanometer)of a hydrophilic domain, and d represents the average pore diameter (nanometer) of fine pores of the porous base material).

**13.** The method for manufacturing a polymer electrolyte membrane according to claim 13, wherein the method comprising of dissolving a polymer electrolyte in solvent, impregnating a porous base material with the solution, taking out the porous base material, drying solvent, and then compositing the porous base material and the polymer electrolyte.

**14.** The method for manufacturing a polymer electrolyte membrane according to claim 13, wherein the method comprising of dissolving a polymer electrolyte in solvent, applying the solution on a porous base material, drying solvent, and then compositing the porous base material and the polymer electrolyte.

**15.** The method for manufacturing a polymer electrolyte membrane according to claim 13, wherein the method comprising of dissolving a polymer electrolyte in solvent, contacting a porous base material with the solution under reduced pressure, then returning the pressure to a normal pressure, drying solvent, and then compositing the porous base material and the polymer electrolyte.

**16.** A fuel cell comprising the polymer electrolyte composite membrane according to claim 1.

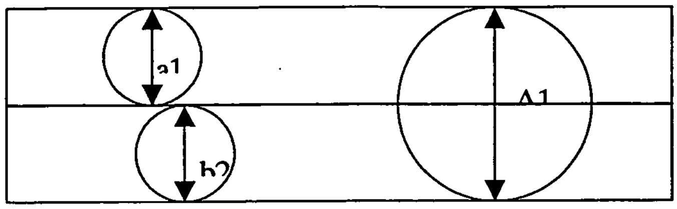


Figure 1

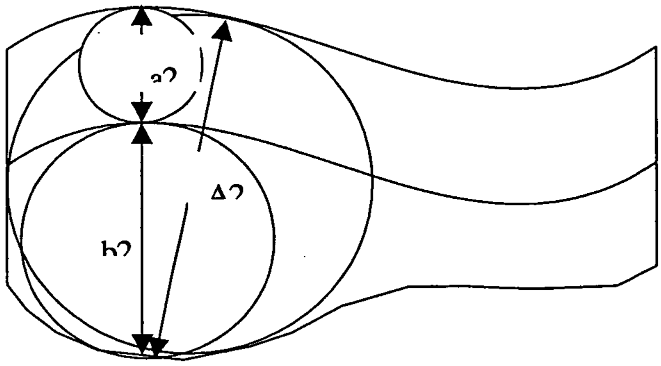


Figure 2

## INTERNATIONAL SEARCH REPORT

International application No.
PCT/JP2004/009454

A. CLASSIFICATION OF SUBJECT MATTER
Int.Cl$^7$ H01M8/02, H01M8/10, H01B1/06, H01B13/00

According to International Patent Classification (IPC) or to both national classification and IPC

B. FIELDS SEARCHED

Minimum documentation searched (classification system followed by classification symbols)
Int.Cl$^7$ H01M8/02, H01M8/10, H01B1/06, H01B13/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-252037 A (Canon Inc.),<br>06 September, 2002 (06.09.02),<br>Claims; Par. No. [0057]; Fig. 1<br>& US 2002/0132169 A1<br>Claims; Fig. 1 | 11<br>1-10,12-16 |
| A | JP 2002-42550 A (Canon Inc.),<br>08 February, 2002 (08.02.02),<br>Claims; Fig. 1<br>(Family: none) | 1-10,12-16 |
| A | JP 2002-42549 A (Canon Inc.),<br>08 February, 2002 (08.02.02),<br>Claims; Fig. 1<br>(Family: none) | 1-10,12-16 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>09 September, 2004 (09.09.04) | Date of mailing of the international search report<br>21 September, 2004 (21.09.04) |
| Name and mailing address of the ISA/<br>Japanese Patent Office<br><br>Facsimile No. | Authorized officer<br><br>Telephone No. |

Form PCT/ISA/210 (second sheet) (January 2004)

**INTERNATIONAL SEARCH REPORT**

International application No. PCT/JP2004/009454

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-173799 A (Sumitomo Chemical Co., Ltd.), 20 June, 2003 (20.06.03), Claims; Par. No. [0034] & US 2002/0187377 A1 Claims; Par. No. [0094] | 13-15 |
| A | JP 2003-17090 A (Sumitomo Chemical Co., Ltd.), 17 January, 2003 (17.01.03), Claims; Par. Nos. [0049] & US 2003/044669 A1 Claims; Par. No. [0078] | 13-15 |

Form PCT/ISA/210 (continuation of second sheet) (January 2004)